# EUROPÄISCHE PATENTSCHRIFT

(11) **EP 4 488 974 B1**
(45) Veröffentlichungstag und Bekanntmachung des Hinweises auf die Patenterteilung: **02.07.2025**
(21) Anmeldenummer: 23183475.5
(22) Anmeldetag: 04.07.2023
(51) Int. Cl.: G07G 1/00, G01G 19/00

(54) **VERKAUFSVORRICHTUNG**
VENDING MACHINE
DISPOSITIF DE VENTE

(43) Veröffentlichungstag der Anmeldung: 08.01.2025
(73) Patentinhaber: Bizerba SE & Co. KG, 72336 Balingen (DE)
(72) Erfinder: Sauter, Daniel, 72461 Albstadt (DE)
(74) Vertreter: Huber, Meik

(56) Entgegenhaltungen:
- EP-A1- 3 370 044
- EP-A1- 3 654 305
- WO-A1-2021/004588

## Beschreibung

Die vorliegende Erfindung betrifft eine Verkaufsvorrichtung zum Selbst-Checkout mit einem Wägemodul, einem Produktscanner zum Scannen von Artikelnummern von Produkten und einer Kommunikationseinheit zum Senden und Empfangen von Artikeldaten an ein Netzwerk zum Speichern von Artikeldaten. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden und der bewegliche Abschnitt trägt ein Lastkreuz mit einer Lastplatte. Der Verformungsabschnitt weist einen Dehnungsmesstreifen zur Messung eines auf die Lastplatte wirkenden Gewichts auf.

Derartige Verkaufsvorrichtungen zum Selbst-Checkout sind dem Fachmann gut bekannt. Diese Verkaufsvorrichtungen umfassen in aller Regel ein Bedienerdisplay zur Interaktion mit der Verkaufsvorrichtung, durch das der Bediener durch den Selbst-Checkoutvorgang geführt wird. Dabei ist es für den Bediener eine Herausforderung, Fehler zu erkennen, zum Beispiel wenn ein Produkt nicht gescannt wurde.

Aufgabe der Erfindung ist es, eine einfache Vorrichtung zu schaffen, die dem Bediener den Selbst-Checkoutvorgang erleichtert und eine intuitive Interaktion mit der Verkaufsvorrichtung ermöglicht.

Diese Aufgabe wird durch eine Verkaufsvorrichtung mit den Merkmalen des Anspruchs 1 gelöst.

Erfindungsgemäß wird eine Verkaufsvorrichtung zum Selbst-Checkout mit einem Wägemodul, einem Produktscanner zum Scannen von Artikelnummern von Produkten und einer

Kommunikationseinheit zum Senden und Empfangen von Artikeldaten an ein Netzwerk zum Speichern von Artikeldaten vorgeschlagen. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden. Der bewegliche Abschnitt trägt ein Lastkreuz mit einer Lastplatte. Der Verformungsabschnitt weist einen Dehnungsmesstreifen zur Messung eines auf die Lastplatte wirkenden Gewichts auf. An der Außenwand des Gehäuses ist ein Leuchtband im Wesentlichen umlaufend am Gehäuse angebracht. Im Wesentlichen umlaufend in diesem Zusammenhang meint, dass das Leuchtband drei Seiten und einen großen Teil der vierten Seite des Gehäuses umläuft, jedoch dass der Anfang und das Ende des Leuchtbandes nicht verbunden oder zusammentreffen müssen. Ein Abstand zwischen Anfang und Ende des Leuchtbandes, auf der Seite, auf der sich Anfang und Ende begegnen, ist damit ebenfalls gemeint. Die Verkaufsvorrichtung umfasst eine Steuereinheit, die eine Artikelnummer vom Produktscanner empfängt und über die Kommunikationseinheit Artikeldaten zu dieser Artikelnummer aus dem Netzwerk empfängt. Die Artikeldaten umfassen mindestens ein Artikelgewicht. Die Steuereinheit umfasst eine Zustandsmaschine, die mindestens einen Self-Checkout-Zustand der Verkaufsvorrichtung abbildet, wobei die Steuereinheit das Leuchtband aufgrund des Zustands der Zustandsmaschine ansteuert.

In einer Ausführungsform befindet sich die Zustandsmaschine in einem Freigabezustand, wenn das Artikelgewicht und das gemessene Gewicht übereinstimmen. Die Zustandsmaschine befindet sich in einem Sperrzustand, wenn das Artikelgewicht und das gemessene Gewicht nicht übereinstimmen.

In einer ersten Ausführungsform beaufschlagt die Steuereinheit das Leuchtband gepulst mit einer Spannung, wenn die Zustandsmaschine in einem Sperrzustand ist. Das heißt, die Spannung wird regelmäßig angeschaltet und ausgeschaltet.

Dadurch entsteht ein Blinken des Leuchtbandes. Dabei ist die Frequenz und die Länge der Spannungspulse so zu wählen, dass das menschliche Auge das Leuchtband als blinkend wahrnimmt. Wenn die Zustandsmaschine in einem Freigabezustand ist, beaufschlagt die Steuereinheit das Leuchtband permanent mit einer Spannung. Das heißt, das Leuchtband leuchtet dauerhaft. Der Fachmann versteht, dass es Ausführungsformen gibt, bei denen die gepulste Spannung für den Freigabezustand herangezogen wird und die permanente Spannung für den Sperrzustand.

In einer Ausführungsform umfasst das Leuchtband erste, zweite und dritte LED-Leuchtmittel. Die ersten LED-Leuchtmittel erzeugen Licht in einem Wellenlängenbereich von 450°nm bis 500°nm, was der Farbe Blau entspricht. Die zweiten LED-Leuchtmittel erzeugen Licht in einem Wellenlängenbereich von 500°nm bis 570°nm, was der Farbe Grün entspricht. Die dritten LED-Leuchtmittel erzeugen Licht in einem Wellenlängenbereich 610°nm bis 760°nm, was der Farbe Rot entspricht. In einer Ausführungsform besteht das Leuchtband aus einem flexiblen Träger. Auf dem flexiblen Träger sind die LED-Leuchtmittel angeordnet. In einer Ausführungsform umfasst der Träger eine bis zehn LED-Leuchtmittel pro cm Länge. Die ersten, zweiten und dritten LED-Leuchtmittel sind in regelmäßigen Anordnungen auf dem Träger angeordnet. Die ersten LED-Leuchtmittel bilden eine erste Gruppe von LED-Leuchtmitteln. Die zweiten LED-Leuchtmittel bilden eine zweite Gruppe von LED-Leuchtmitteln. Die dritten LED-Leuchtmittel bilden eine dritte Gruppe von LED-Leuchtmitteln. Die LED-Leuchtmittel einer Gruppe werden durch die Steuereinheit jeweils gemeinsam angesteuert. In einer Ausführungsform ist das Leuchtband auf der Seite, auf der die LED-Leuchtmittel angebracht sind, mit Silikon überzogen. Silikon ist lichtdurchlässig. Gleichzeitig entsteht ein diffuser Effekt, so dass das Licht der einzelnen LED-Leuchtmittel etwas gestreut wird. So entstehen aus den drei Gruppen von LED-Leuchtmitteln, die für das menschliche Auge als blau, grün und rot wahrnehmbar sind, überlagerte Farben, so dass annähernd der gesamte RGB-Farbraum zur Verfügung steht.

Somit nimmt das menschliche Auge das Leuchtband als rot leuchtend wahr, wenn sich die Zustandsmaschine in einem ersten Zustand befindet und die dritte Gruppe von LED-Leuchtmitteln durch die Steuereinrichtung mit Spannung beaufschlagt wird. Das menschliche Auge nimmt das Leuchtband als grün leuchten wahr, wenn sich die Zustandsmaschine im zweiten Zustand befindet und die zweite Gruppe von LED-Leuchtmitteln durch die Steuereinrichtung mit Spannung beaufschlagt wird.

In einer Ausführungsform beaufschlagt die Steuereinheit die zweite Gruppe von LED-Leuchtmitteln des Leuchtbandes permanent mit einer Spannung, wenn sich die Zustandsmaschine in einem Freigabezustand befindet. Dies entspricht einem Leuchten in der Farbe grün. Die Steuereinheit beaufschlagt die dritte Gruppe von LED-Leuchtmitteln des Leuchtbandes permanent mit einer Spannung, wenn sich die Zustandsmaschine in einem Sperrzustand befindet. Dies entspricht einem Leuchten in der Farbe rot.

In einer Ausführungsform ist das Gehäuse einstückig und wannenförmig ausgebildet. Der Fachmann versteht unter einem einstückig und wannenförmig ausgebildeten Gehäuse eine Form eines Gehäuses, die einer Wanne ähnelt. Sie hat eine quadratische oder rechteckige Grundfläche, wobei die Ecken abgerundet sein können. Das Gehäuse hat einen Grundkörper, der in einer Ausführungsform aus einem Metallguss hergestellt ist und somit auch komplexe Formen, insbesondere Öffnungen und innere Wandungen aufweisen kann. Die Länge und die Breite des Gehäuses sind wesentlich größer als dessen Höhe. Das Gehäuse umfasst eine Bodenplatte mit seitlichen Wänden, die einstückig an der Bodenplatte ausgebildet sind. Das Gehäuse ist oben offen und mit einem Freiraum im Inneren, um unterschiedliche Module, wie die Wägezelle, elektronische Module und Anderes im Inneren des Gehäuses aufzunehmen. In einer Ausführungsform ist der Innenbereich des Gehäuses oben mit einer Abdeckung abgedeckt. Unter den Begriff einstückig und wannenförmig fällt auch ein Gehäuse, das im Inneren Trennwände für verschiedene Räume oder Stabilisierungsstreben hat. Des Weiteren fällt auch ein Gehäuse darunter, dessen Bodenplatte an einigen Stellen stufenförmig ausgebildet ist, so dass an diesen Stellen des Gehäuses unterhalb der Bodenplatte des Gehäuses ein Freiraum entsteht, wenn der Grundkörper auf einer ebenen Fläche abgesetzt wird. Dieser Freiraum dient zum Beispiel für das Anbringen von Steckern unterhalb des Gehäuses. Das Gehäuse ist auch dann als einstückig und wannenförmig zu verstehen, wenn an verschiedenen Stellen in der, insbesondere abgestuften, Bodenplatte oder seitlichen Wänden Durchgangsöffnungen vorhanden sind, zum Beispiel für das Anbringen von Steckerbuchsen, das Durchführen von Kabeln oder die Montage von Trägern und anderen Elementen der Verkaufsvorrichtung. Der Begriff wannenförmig ist deswegen nur als beschreibend für das grundsätzliche Erscheinungsbild des Gehäuses anzusehen.

In einer Ausführungsform handelt es sich bei der Zustandsmaschine um einen endlichen Automaten, der aus Zuständen, Zustandsübergängen und Aktionen besteht.

In einer Ausführungsform tariert die Steuereinheit nach einem Verifikationsvorgang das Wägemodul. Das heißt, wird ein Produkt durch den Bediener eingescannt und zur Verifikation auf das Wägemodul gelegt und wird eine Übereinstimmung zwischen Gewicht des gewogenen Produkts und Artikelgewicht festgestellt, so ist der Scannvorgang des Produktscanners verifiziert. Dann wird das Wägemodul tariert, das heißt, die Waage wird auf Null gesetzt, obwohl der Artikel noch auf der Lastplatte liegt. Wird dann ein weiterer Artikel zusätzlich auf die Lastplatte gelegt, so sendet das Wägemodul nur den Gewichtswert des weiteren Artikels an die Steuereinheit. Auf diese Weise wird immer nur der Gewichtswert des neuen, zusätzlich auf die Lastplatte aufgelegten Artikels an die Steuereinheit gesendet.

In einer Ausführungsform versetzt die Steuereinheit beim Detektieren einer Last durch das Wägemodul ohne eine Artikelnummer vom Produktscanner zu erhalten, die Zustandsmaschine in den Sperrzustand und/oder zeigt auf einem Bedienerdisplay ein Hinweissignal an, dass der Scanvorgang wiederholt werden muss. Sollte ein Bediener vergessen einen Artikel zu scannen und legt ihn ungescannt auf das Wägemodul, so wird mit dem Leuchtband ein Sperrzustand angezeigt und der Bediener wird auf seinen Fehler aufmerksam gemacht. Ergänzend wird in einer Ausführungsform der Bediener über das Bedienerdisplay auf seinen Fehler hingewiesen.

In einer Ausführungsform umfasst die Verkaufsvorrichtung ein Bezahlterminal. Der Bezahlvorgang kann nur dann durch eine Nutzereingabe gestartet werden, wenn die Zustandsmaschine sich im Freigabezustand befindet. In einer Ausführungsform versetzt die Steuereinheit die Zustandsmaschine nach erfolgreichem Abschluss des Bezahlvorgangs in einen Abschlusszustand. Dieser Abschlusszustand bedeutet das erfolgreiche Beenden des Selbst-Checkoutvorgangs.

In einer Ausführungsform umläuft das Leuchtband das Gehäuse einmal, insbesondere umläuft das Leuchtband das Gehäuse im oberen Bereich seiner Seitenwände einmal, wobei zwischen Anfang und Ende des Leuchtbandes ein, im Verhältnis zur Länge des Leuchtbandes, kleiner Abstand sein kann. Dabei umfasst die Verkaufsvorrichtung eine Lastplatte, die auf dem Lastkreuz abgelegt ist. Dabei führen die äußeren Ränder der Lastplatte über das Lastkreuz und über die Oberkante des Gehäuses nach unten, so dass die Lastplatte wie ein Deckel auf der Oberseite des Gehäuses schwebt. In einer Ausführungsform befindet sich das Leuchtband im oberen Bereich der Seitenwände des Gehäuses, jedoch unterhalb der Ränder der Lastplatte. In einer Ausführungsform ist das Leuchtband am oberen Rand des Gehäuses derart angebracht, dass es von den überstehenden Rändern der Lastplatte verdeckt wird. In diesem Fall leuchtet das Licht des Leuchtbandes diffus unter den nach unten stehenden Rändern der Lastplatte hervor.

In einer Ausführungsform sind in dem flexiblen Trägermaterial des Leuchtbandes elektrische Leitungen für die Ansteuerung der LED-Leuchtmittel integriert.

In einer Ausführungsform erzeugen die LED-Leuchtmittel Licht im Wellenlängenbereich von 230 nm bis 500 nm. Der Träger mit den LED-Leuchtmitteln ist mit Phosphor überzogen. Insbesondere ist das Leuchtband auf der Seite, auf der die LED-Leuchtmittel angebracht sind, mit Phosphor überzogen. Phosphor wandelt das blaue oder ultraviolette Licht der LED-Leuchtmittel in weißes Licht.

Es ist insbesondere zu beachten, dass nicht jedes der LED-Leuchtmittel einzeln und separat mit Phosphor überzogen ist bzw. wurde, sondern dass die LED-Leuchtmittel zuerst auf dem Träger montiert werden und dann die ganze Seite des Trägers mit Phosphor überzogen wird. So kann die Dichte der LED-Leuchtmittel pro Länge des Leuchtbandes deutlich erhöht werden und es kommt zu einem sehr homogenen Leuchteffekt. Dies führt auch dazu, dass die Ausleuchtung durch das Licht der LED-Leuchtmittel im Bezug zur Ebene des Leuchtbandes ca. 170° beträgt, das heißt, das Licht ist auch aus sehr spitzen Winkeln wahrnehmbar.

In einer Ausführungsform weist der flexible Träger auf der den LED-Leuchtmitteln gegenüberliegenden Seite eine Schicht aus Klebematerial auf. In einer Ausführungsform handelt es sich um eine Schicht aus wärmeleitendem Klebematerial. Das Leuchtband ist mit dem Klebematerial am Gehäuse angebracht, insbesondere angeklebt. Die durch die LED-Leuchtmittel entstehende Hitze wird über die Schicht aus Klebematerial, insbesondere über das wärmeleitende Klebematerial, an das Gehäuse abgegeben.

Das Klebematerial haftet dabei auf einer Fläche aus unbeschichtetem und/oder beschichtetem Metallguss, sodass das Gehäuse an der Stelle, an der das Leuchtband angeklebt wird, beschichtet oder unbeschichtet sein kann.

In einer Ausführungsform ist das Leuchtband mit der Steuereinheit elektrisch verbunden. Das Leuchtband wird von der Steuereinheit mit einer Gleichspannung im Bereich von 6°Volt bis 36°Volt, insbesondere 12°Volt oder 24°Volt, angesteuert.

In einer Ausführungsform umfasst das Gehäuse eine Aussparung oder eine einseitige Aussparung, die im oberen Gehäusebereich an der Außenseite des Gehäuses umlaufend angebracht ist, in die das Leuchtband eingeklebt ist. Unter Aussparung ist dabei eine Vertiefung in der Gehäusewand zu verstehen in der Form einer Rille. Eine einseitige Aussparung meint eine Kante, die zum Beispiel in einer schräg verlaufenden Gehäusewand vorhanden ist. Die Kante bildet eine Vertiefung, deren hinteres Ende zur Aufnahme des Leuchtbandes eine vertikale Ebene ist.

In einer Ausführungsform umfasst die Verkaufsvorrichtung einen Diffusor, der außen am Gehäuse angebracht ist und die Aussparung abdeckt. Der Diffusor sorgt für eine Streuung des Lichtes der LED-Leuchtmitte, sodass nicht mehr zu erkennen ist, dass es sich um diskrete Lichtquellen handelt, sondern dass der Eindruck entsteht, es würde sich um eine ausgedehnte homogene Lichtmittel handeln. Außerdem sorgt der Diffusor dafür, dass das Leuchtband aus jedem Betrachtungswinkel gleich hell wirkt. Der Diffusor verstärkt den Effekt des Phosphors beziehungsweise des Silikons.

In einer Ausführungsform besteht der Diffusor aus einem transluzenten Material. In einer Ausführungsform handelt es sich bei dem transluzenten Material um ein transluzentes Polycarbonat.

In einer Ausführungsform umfasst der Diffusor auf seiner Außenseite eine Strukturierung. Die Strukturierung macht den Diffusor von der Außenseite in Richtung Gehäuse blickdicht. Hingegen ist der Diffusor von der Gehäuseseite nach außen transluzent.

In einer Ausführungsform ist der Diffusor als Ring ausgebildet. Der Ring hat die Abmessungen des Gehäuses im Bereich der Aussparung. Der Ring ist formschlüssig an dem Gehäuse über der Aussparung angebracht. Insbesondere ist der Ring mit einem Rastmechanismus angebracht. In einer Ausführungsform deckt der Diffusor die Aussparung ab. In einer Ausführungsform ist der Diffusor mit dem Gehäuse verklebt oder verschraubt.

In einer Ausführungsform ist die Distanz zwischen den LED-Leuchtmitteln und der Innenseite des Diffusors kleiner 3°mm. In einer Ausführungsform ist die Distanz zwischen den LED-Leuchtmitteln und der Innenseite des Diffusors kleiner 1°mm.

In einer Ausführungsform ist das Leuchtband eine Seitenlichtfaser. In einer Ausführungsform besteht die Seitenlichtfaser aus vier insbesondere polyoptischen Einzelfasern, die von einem diffusen, weissen Mantel umhüllt werden. In einer Ausführungsform sind die Oberflächen der vier polyoptischen Einzelfasern durch ein abrasives Verfahren aktiviert, sodass ein homogener Lichtaustritt im Abstrahlwinkel von 360° aus der Seitenlichtfaser entsteht. Seitenlichtfasern sind zum Beispiel in der EP3525017B1 und der EP3524877B1 offenbart.

In einer Ausführungsform berücksichtig die Steuereinheit, im Fall, dass die Artikelnummer einem Artikel entspricht, der der Fertigverpackungsverordnung unterliegt, die in der Fertigverpackungsverordnung vorgegeben Toleranzen. Das heißt, anhand der Artikelnummer wird kein konkretes Gewicht zur Verifikation des Artikels vorgegeben, sondern ein Gewichtsband, das der Fertigverpackungsverordnung entspricht. Die Zustandsmaschine befindet sich im Freigabezustand oder wird in den Freigabezustand versetzt, wenn das Artikelgewicht sich innerhalb des in der Fertigverpackungsverordnung vorgegeben Gewichtsbandes befindet.

Im Rahmen dieser Offenbarung sind identische Gewichte zwischen Artikelgewicht anhand der Artikelnummer und durch das Wägemodul bestimmtes Gewicht auch als identisch anzusehen, wenn sie bis auf eine Toleranz identisch sind.

Die Kommunikationseinheit zum Senden und Empfangen von Artikeldaten aus einem Netzwerk kann sowohl als drahtgebundene wie auch drahtlose Kommunikationseinheit realisiert sein. In einer Ausführungsform ist das Netzwerk ein Cloud-Netzwerk. EP3370044A1 offenbart ein Wägemodul mit einem Verformungsabschnitt mit einem beweglichen Abschnitt mit Lastkreuz und Lastplatte,sowie Dehnungsmessstreifen zur Messung eines auf die Lastplatte wirkenden Gewichts

WO2021/004588A1 offenbart eine Verkaufsvorrichtung zum Selbst-Checkout mit einem Wägemodul,einem Produktscanner zum Scannen von Artikelnummern von Produkten, wobei an der Außenwand des Gehäuses ein Leuchtband angebracht ist, das im Wesentlichen umlaufend am Gehäuse angebracht ist, und wobei die Verkaufsvorrichtung eine Steuereinheit umfasst, die eine Artikelnummer vom Produktscanner empfängt, wobei die Artikeldaten mindestens ein Artikelgewicht umfassen, wobei die Steuereinheit eine Zustandsmaschine umfasst, die mindestens einen Self-Checkout-Zustand der Verkaufsvorrichtung abbildet, wobei die Steuereinheit das Leuchtband aufgrund des Zustands der Zustandsmaschine ansteuert. EP3654305A1 offenbart eine Verkaufsvorrichtung zum Selbst-Checkout mit einem Wägemodul, wobei das Wägemodul ein Gehäuse umfasst, in dem eine Wägezelle untergebracht ist,wobei die Wägezelle einen festen Abschnitt und einen beweglichen Abschnitt umfasst, wobei der feste Abschnitt mit dem Gehäuse verbunden ist und der bewegliche Abschnitt eine Lastplatte trägt, wobei die Verkaufsvorrichtung eine Steuereinheit umfasst, die eine Artikelnummer vom Produktscanner empfängt, wobei die Steuereinheit eine Zustandsmaschine umfasst, die mindestens einen Self-Checkout-Zustand der Verkaufsvorrichtung abbildet, wobei die Steuereinheit das Leuchtband aufgrund des Zustands der Zustandsmaschine ansteuert.

Einige Ausführungsformen der Erfindung sind in den Zeichnungen beispielhaft gezeigt und nachfolgend beschrieben. Es zeigen, jeweils in schematischer Darstellung:
- Fig. 1: Eine erfindungsgemäße Verkaufsvorrichtung,
- Fig. 2: Einen Ausschnitt einer erfindungsgemäßen Verkaufsvorrichtung, und
- Fig. 3: Ein erfindungsgemäßes Verfahren zum Betrieb einer Verkaufsvorrichtung.

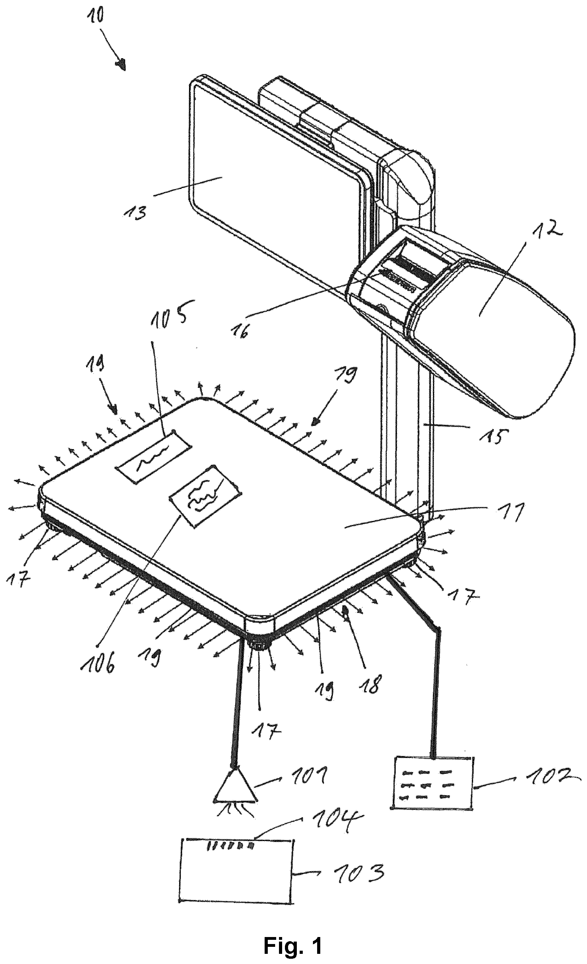

Fig. 1 zeigt eine erfindungsgemäße Verkaufsvorrichtung 10 nach einer ersten Ausführungsform. Die Verkaufsvorrichtung umfasst einen Wägemodul mit einem Gehäuse 18, in dem eine Wägezelle untergerbacht ist. Die Wägezelle trägt ein Lastkreuz, das seinerseits eine Lastplatte 11 trägt. Die Lastplatte 11 hat einen nach unten stehenden Rand, der über die obere Kante des Gehäuses 18 ragt. Am Wägemodul ist ein Stativ 15 befestigt, das einen Drucker 12 mit einer Etikettenausgabe 16 trägt. Das Stativ 15 trägt ferner ein Bedienerdisplay 13, das als Touchscreen ausgebildet ist. Das Wägemodul ruht auf vier in seinen Ecken angebrachten Füßen 17. An äußeren Rand des Gehäuses 18 ist umlaufend ein Leuchtband 19 angebracht, das von einer Steuereinheit in Abhängigkeit eines Freigabezustandes der Verkaufsvorrichtung angesteuert wird.

Mit der Verkaufsvorrichtung 10 verbunden oder in die Verkaufsvorrichtung 10 integriert ist ein Bezahlterminal 102 zum Abwickeln eines elektronischen Bezahlvorgangs. Des Weiteren ist mit der Verkaufsvorrichtung 10 verbunden oder in die Verkaufsvorrichtung 10 integriert ein Produktscanner 101 zum Scannen einer Artikelnummer in Form eines Barcodes 104 oder QR-Codes. Der Barcode 104 oder QR-Code gibt eine eindeutige Artikelnummer wieder, anhand dessen der Artikel zu identifizieren ist. Die Verkaufsvorrichtung umfasst eine Kommunikationseinheit, mit der durch Senden einer entsprechenden Artikelnummer an ein Netzwerk zum Artikel gehörende Artikeldaten, wie zum Beispiel das Gewicht, empfangen werden können. Unter dem Gewicht des Artikels ist im Rahmen dieser Offenbarung das Gewicht des zugehörigen Produkts inklusive der Produktverpackung zu verstehen. Beispielhaft sind auf der Lastplatte 11 der Verkaufsvorrichtung zwei Produkte 105, 106 gezeigt, während ein weiteres Produkt 103 am Produktscanner 101 gezeigt ist.

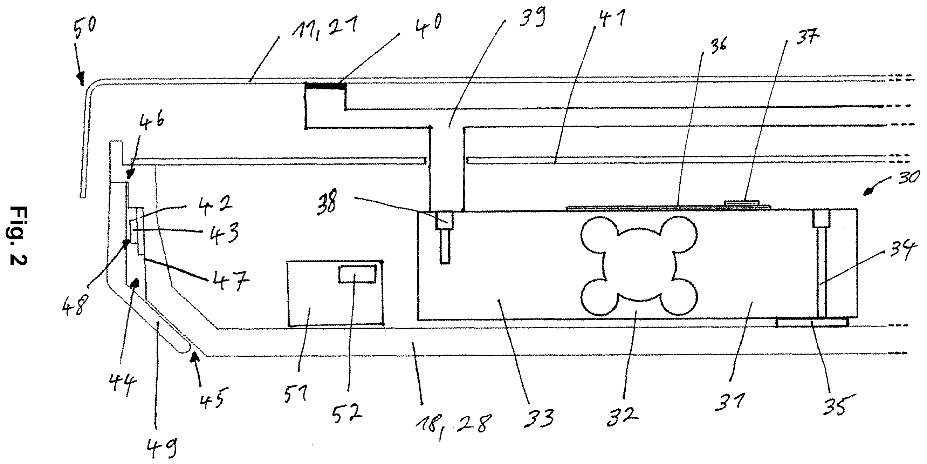

Fig. 2 zeigt einen Schnitt durch das Gehäuse 18 einer Verkaufsvorrichtung 10. Das Gehäuse 18 ist ein Metallgussgehäuse und kann komplexe Formen annehmen. Im Inneren des Gehäuses 18 ist auf einem Sockel 35 eine Wägezelle 30 mit Schrauben 34 verschraubt. Die Wägezelle 30 umfasst einen mit dem Gehäuse 18 verschraubten festen Abschnitt 31, einen Verformungsabschnitt 32 und einen beweglichen Abschnitt 33, auf dem ein Lastkreuz 39 mit einer Befestigung 38 angebracht ist. Das Lastkreuz 39 trägt die Lastplatte 11 der Verkaufsvorrichtung, wobei zwischen Lastkreuz 39 und Lastplatte 11 Gummipuffer 40 angebracht sind. Die Lastplatte 11 umfasst an ihren Rändern eine Biegung 50, so dass die Lastplatte 11 seitlich nach unten über die oberen Ränder des Gehäuses 18 ragt. Die Gewichtskraft eines Produkts auf der Lastplatte 11 und auch die Gewichtskraft von Lastkreuz 39 und Lastplatte 11 selbst wirken so auf den beweglichen Abschnitt 33 der Wägezelle 30. Dies führt zu einer mechanischen Verformung des Verformungsabschnitts 32, welche über auf dem Verformungsabschnitt 32 angebrachte Dehnungsmesstreifen 36 gemessen wird. Die gemessene Verformung wird mit einer Auswerteeinheit 37 bestimmt und in einen Gewichtswert des Produkts umgerechnet. Der Innenraum des Gehäuses 18, in dem sich die Wägezelle 30 und auch eine Steuereinheit 51 und ggf. weitere Komponenten der Verkaufsvorrichtung wie Netzteil und ähnliches befinden, ist mit einer Abdeckung 41 abgedeckt.

Das Gehäuse 18 besteht aus einer Bodenplatte und vier nach oben ragenden Seitenwänden. Das Gehäuse ist aus Metallguss und somit einstückig ausgebildet. Der Übergang zwischen Bodenplatte und Seitenwänden ist angeschrägt. Im oberen Bereich der Seitenwände ist eine Aussparung 44 angebracht, so dass eine vertikal stehende Außenwand 47 an den Seitenwänden des Gehäuses 18 etwas zurückversetzt ist. An dieser vertikal stehenden Außenwand 47 ist der Träger 42 des Leuchtbandes 19 festgeklebt. Der Träger 42 ist aus flexiblem Material gebildet und kann somit auch um die Ecken des Gehäuses 18 in der Aussparung 44 geführt werden. Flexibel meint in diesem Zusammenhang, dass der Träger 42 zumindest senkrecht zur Ebene, in der der Träger 42 verläuft, verbogen werden kann, nicht gezwungenermaßen auch in der Ebene des Trägers 42 selbst. Auf dem Träger 42 sind LED-Leuchtmittel 43 abgebracht. Die LED-Leuchtmittel 43 können in Längsrichtung des Trägers 42 mit einer Dichte von bis zu zehn LED-Leuchtmittel 43 pro cm angebracht sein. Träger 42 und LED-Leuchtmittel 43 sind auf der Seite der LED-Leuchtmittel mit einer Schutzschicht 48 aus Silikon oder Phosphor abgedeckt. Dabei ist die Schutzschicht 48 nicht nur auf den LED-Leuchtmitteln 43 selbst vor deren Montage auf dem Träger 42 angebracht, sondern wird nach der Montage der LED-Leuchtmittel 43 auf dem Träger 42 über den Trägers 42 und die LED-Leuchtmittel 42 angebracht. So kann eine höhere Dichte der LED-Leuchtmittel 43 auf dem Träger 42 erreicht werden und der Abstrahlwinkel für homogenes Licht jedes LED-Leuchtmittels 43 erhöht sich auf ca. 170°. Eine Schutzschicht 48 aus Silikon wird aufgetragen, wenn die LED-Leuchtmittel 43 Licht im Wellenlängenbereich von 450°nm bis 500°nm, 500°nm bis 570°nm beziehungsweise 610°nm bis 760°nm erzeugen und die unterschiedlichen LED-Leuchtmittel 43 in regelmäßigen Anordnungen auf dem Träger 42 angeordnet sind. Hierdurch kann das Leuchtband 19 in RGB Farben über die Steuereinheit 51 zum Leuchten gebracht werden. Eine Schutzschicht 48 aus Phosphor wird aufgetragen, wenn die LED-Leuchtmittel 43 Licht im Wellenlängenbereich von 230 nm bis 500 nm (ultraviolettes bis blaues Licht) abgeben. Durch die Schutzschicht 48 aus Phosphor wird dieses Licht für den Bediener als weißes Licht sichtbar.

Die Aussparung 44 mit Träger 42, LED-Leuchtmitteln 43 und Schutzschicht 48 ist durch einen Diffusor 49 abgedeckt. Der Diffusor 49 bietet einen mechanischen Schutz des Leuchtbandes 19, 29 und bricht das Licht gleichzeitig, so dass das Leuchtband 19 wie eine homogene Lichtquelle wirkt. Dazu kann der Diffusor 49 auf seiner äußeren Fläche strukturiert, das heißt oberflächenbearbeitet sein. Der Effekt, dass das Leuchtband 19 wie eine homogene Lichtquelle wirkt, wird durch die hohe Dichte an LED-Leuchtmitteln 43 und durch die gemeinsame Schutzschicht 48 aus Silikon oder Phosphor auf den LED-Leuchtmitteln 43 hervorgerufen und durch den Diffusor 49 und die außenseitige Strukturierung des Diffusors 49 verstärkt bzw. vervollständigt. Der Diffusor 49 liegt an Flächen 45, 46 des Gehäuses 18 oberhalb und unterhalb der Aussparung 44 an und ist an diese Flächen 45, 46 geklebt, mit einer Rastverbindung daran verrastet oder verschraubt. Der Diffusor 49 ist ein ringförmiges Bauteil, das von unten über das Gehäuse 18 geschoben wird und formschlüssig auf die Seitenwände des Gehäuses 18 passt. Der Diffusor 49 ist aus transluzentem Material, insbesondere aus transluzentem Polycarbonat, hergestellt.

Die Steuereinheit 51 umfasst eine Zustandsmaschine 52, die mindestens einen Freigabezustand der Verkaufsvorrichtung abbildet. Die Steuereinheit steuert das Leuchtband 19 aufgrund des Zustandes der Zustandsmaschine 52.

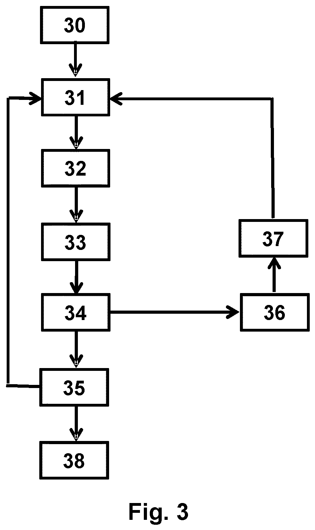

Fig. 3 zeigt schematische ein Verfahren zum Betrieb einer Verkaufsvorrichtung. In Schritt 30 startet ein Kunde, der ein Nutzer der Verkaufsvorrichtung zum Selbst-Checkout ist, einen Verkaufsvorgang. In Schritt 31 scannt er mit dem Produktscanner ein Produkt, das er mit der Verkaufsvorrichtung kaufen möchte. Der Produktscanner bestimmt die Artikelnummer des Produkts und sendet diese an die Steuervorrichtung. Eine Kommunikationsvorrichtung der Verkaufsvorrichtung bezieht aufgrund der Artikelnummer des Produkts über ein Netzwerk ein zum Produkt zugehöriges Artikelgewicht in Schritt 32. Der Kunde legt dann das gescannte Produkt auf die Lastplatte und das Wägemodul bestimmt das zugehörige Gewicht des Produkts in Schritt 33. In Schritt 34 wird das Artikelgewicht und das gewogene Gewicht des Produkts verglichen. Stimmt das Gewicht überein, so verbringt die Steuervorrichtung die Zustandsmaschine in den Freigabezustand in Schritt 35. Dabei wird das Leuchtband gemäß des Freigabezustands angesteuert, insbesondere im Falle eines farbigen Leuchtbandes leuchtet das Leuchtband grün und im Falle eines monochromen Leuchtband leuchtet das Leuchtband permanent. Das Verfahren geht weiter zu Schritt 31, in dem der Kunde einen weiteren Artikel scannt. Das Wägemodul wird hierbei tariert.

Stimmt das Gewicht nicht überein, so verbringt die Steuervorrichtung die Zustandsmaschine in den Sperrzustand in Schritt 36. Dabei wird das Leuchtband gemäß des Sperrzustands angesteuert, insbesondere im Falle eines farbigen Leuchtbandes leuchtet das Leuchtband rot und im Falle eines monochromen Leuchtband blinkt das Leuchtband. Der Kunde wird über das Bedienerdisplay auf den Fehler hingewiesen und zur Entnahme des Artikels von der Lastplatte aufgefordert. In Schritt 37 wird über das Wägemodul eine Reduktion des Gewichts, so dass auf dem Wägemodul das vorherige Gewicht wahrgenommen, das dem tarierten Gewicht und somit 0 kg entspricht. Damit hat die Verkaufsvorrichtung detektiert, dass der Kunde das falsch aufgelegte Produkt wieder von der Lastplatte entnommen hat. Somit geht das Verfahren in Schritt 31 über, in dem der Kunde ein neues Produkt scannen kann.

Befindet sich das Verfahren in Schritt 35 und befindet sich somit die Zustandsmaschine in einem Freigabezustand, kann der Kunde über das Bedienerdisplay den Einkauf beenden und einen Bezahlvorgang mit dem Bezahlterminal starten. Mit der Bezahlung schliesst der Kunde seinen Einkaufsvorgang ab**.**

Es ist anzumerken, dass der Kunde auf diese Art mehrere Produkte bezahlen kann, die er nacheinander scannt und verifiziert. Jedes Produkt wird mit dem Verfahren einzeln verifiziert, so dass sich Toleranzen beim Wägevorgang nicht aufsummieren. Da beim Übergang von Schritt 35 auf Schritt 31 das Wägemodul immer wieder tariert wird, kann der Kunde alle Produkte nacheinander, additiv auf die Lastplatte legen, bis alle zu bezahlenden Produkte auf der Lastplatte liegen. Trotzdem wiegt das Wägemodul durch die jeweilige Tarafunktion immer nur das neu aufgelegte Produkt und gibt dieses Gewicht an die Steuereinheit zur Verifikation.

Die Funktionen verschiedener in den Zeichnungen gezeigter Elemente, inklusive der Funktionsblöcke, können durch dezidierte Hardware oder durch generische Hardware, die in der Lage ist, Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Verkaufsvorrichtung zum Selbst-Checkout mit einem Wägemodul, einem Produktscanner zum Scannen von Artikelnummern von Produkten und einer Kommunikationseinheit zum Senden und Empfangen von Artikeldaten an ein Netzwerk zum Speichern von Artikeldaten, wobei das Wägemodul ein Gehäuse (18, 28) umfasst, in dem eine Wägezelle (30) untergebracht ist, wobei die Wägezelle (30) einen festen Abschnitt (31), einen Verformungsabschnitt (32) und einen beweglichen Abschnitt (33) umfasst, wobei der feste Abschnitt (31) mit dem Gehäuse (18, 28) verbunden ist und der bewegliche Abschnitt (33) ein Lastkreuz (39) mit einer Lastplatte (11, 21) trägt, wobei der Verformungsabschnitt (32) einen Dehnungsmesstreifen (36) zur Messung eines auf die Lastplatte (11, 21) wirkenden Gewichts aufweist, **dadurch gekennzeichnet, dass** an der Außenwand (47) des Gehäuses ein Leuchtband (19, 29) angebracht ist, das im Wesentlichen umlaufend am Gehäuse (18, 28) angebracht ist, und dass die Verkaufsvorrichtung eine Steuereinheit (51) umfasst, die eine Artikelnummer vom Produktscanner empfängt und über die Kommunikationseinheit Artikeldaten zu dieser Artikelnummer aus dem Netzwerk empfängt, wobei die Artikeldaten mindestens ein Artikelgewicht umfassen, wobei die Steuereinheit (51) eine Zustandsmaschine (52) umfasst, die mindestens einen Self-Checkout-Zustand der Verkaufsvorrichtung abbildet, wobei die Steuereinheit (51) das Leuchtband (19, 29) aufgrund des Zustands der Zustandsmaschine (52) ansteuert.

2. Verkaufsvorrichtung zum Selbst-Checkout, nach Anspruch 1, **dadurch gekennzeichnet, dass** die Zustandsmaschine (52) sich in einem Freigabezustand befindet, wenn das Artikelgewicht und das gemessene Gewicht übereinstimmen, und dass die Zustandsmaschine sich in einem Sperrzustand befindet, wenn das Artikelgewicht und das gemessene Gewicht nicht übereinstimmen.

3. Verkaufsvorrichtung zum Selbst-Checkout, nach Anspruch 2, **dadurch gekennzeichnet, dass** die Steuereinheit das Leuchtband gepulst mit einer Spannung beaufschlagt, wenn sich die Zustandsmaschine in einem Sperrzustand befindet und permanent mit einer Spannung beaufschlagt, wenn sich die Zustandsmaschine in einem Freigabezustand befindet.

4. Verkaufsvorrichtung zum Selbst-Checkout, nach einem der Ansprüche 1 bis 3, **dadurch gekennzeichnet, dass** das Leuchtband eine erste Gruppe, eine zweite Gruppe und eine dritte Gruppe von LED-Leuchtmitteln umfasst und die Steuereinheit (51) die zweite Gruppe von LED-Leuchtmitteln (43) des Leuchtbandes (19, 29) permanent mit einer Spannung beaufschlagt, wenn sich die Zustandsmaschine (52) in einem Freigabezustand befindet und die dritte Gruppe von LED-Leuchtmitteln (43) des Leuchtbandes (19, 29) permanent mit einer Spannung beaufschlagt, wenn sich die Zustandsmaschine (52) in einem Sperrzustand befindet.

5. Verkaufsvorrichtung zum Selbst-Checkout, nach einem der Ansprüche 1 bis 4, **dadurch gekennzeichnet, dass** die Steuereinheit nach einem Verifikationsvorgang durch die Zustandsmaschine das Wägemodul tariert.

6. Verkaufsvorrichtung zum Selbst-Checkout, nach einem der Ansprüche 1 bis 5, **dadurch gekennzeichnet, dass** die Steuereinheit beim Detektieren einer Last durch das Wägemodul ohne eine Artikelnummer vom Produktscanner zu erhalten, die Zustandsmaschine in den Sperrzustand versetzt und/oder auf einem Bedienerdisplay ein Hinweissignal anzeigt, dass der Scanvorgang wiederholt werden muss.

7. Verkaufsvorrichtung zum Selbst-Checkout, nach einem der Ansprüche 1 bis 6, **dadurch gekennzeichnet, dass** die Verkaufsvorrichtung ein Bezahlterminal umfasst und der Bezahlvorgang nur dann durch eine Nutzereingabe gestartet werden kann, wenn die Zustandsmaschine sich im Freigabezustand befindet, und insbesondere, dass die Steuereinheit die Zustandsmaschine nach erfolgreichem Abschluss des Bezahlvorgangs in einen Abschlusszustand versetzt.

8. Verkaufsvorrichtung zum Selbst-Checkout, nach einem der Ansprüche 1 bis 7, **dadurch gekennzeichnet, dass** das Leuchtband aus einem flexiblen Träger (42) besteht, auf dem die LED-Leuchtmittel (43) angeordnet sind, wobei der Träger (42) insbesondere eine bis zehn LED-Leuchtmittel (43) pro cm Länge umfasst, und insbesondere in dem flexiblen Träger (42) des Leuchtbandes (19, 29) elektrische Leitungen für die Ansteuerung der LED-Leuchtmittel (43) integriert sind.

9. Verkaufsvorrichtung zum Selbst-Checkout, nach einem der vorhergehenden Ansprüche, **dadurch gekennzeichnet, dass** die LED-Leuchtmittel (43) Licht im Wellenlängenbereich von 230 nm bis 500 nm erzeugen und insbesondere mit Phosphor überzogen sind, wobei insbesondere das Leuchtband (19, 29) auf der Seite, auf der die LED-Leuchtmittel (43) angebracht sind, mit Phosphor überzogen ist.

10. Verkaufsvorrichtung zum Selbst-Checkout, nach einem der Ansprüche 1 bis 9, **dadurch gekennzeichnet, dass** der flexible Träger (42) erste, zweite und dritte LED-Leuchtmittel (43) umfasst, die Licht im Wellenlängenbereich von 450°nm bis 500°nm, 500°nm bis 570°nm beziehungsweise 610°nm bis 760°nm erzeugen und die ersten, zweiten und dritten LED-Leuchtmittel (43) in regelmäßigen Anordnungen auf dem Träger angeordnet sind, wobei die ersten, zweiten und dritten LED-Leuchtmittel (43) jeweils als Gruppe gemeinsam angesteuert werden, und wobei insbesondere das Leuchtband auf der Seite, auf der die LED-Leuchtmittel (43) angebracht sind, mit Silikon überzogen ist.

11. Verkaufsvorrichtung zum Selbst-Checkout, nach einem der vorhergehenden Ansprüche, **dadurch gekennzeichnet, dass** das Gehäuse eine Aussparung oder eine einseitige Aussparung (44) umfasst, die im oberen Gehäusebereich (18, 28) an der Außenseite (47) des Gehäuses (18, 28) umlaufend angebracht ist, in die das Leuchtband (19, 29) eingeklebt ist, und insbesondere die Verkaufsvorrichtung einen Diffusor (49) umfasst, der außen am Gehäuse angebracht ist und die Aussparung (44) abdeckt.

12. Verkaufsvorrichtung zum Selbst-Checkout, nach einem der Ansprüche 1 bis 7, **dadurch gekennzeichnet, dass** das Leuchtband eine Seitenlichtfaser ist.

13. Verkaufsvorrichtung zum Selbst-Checkout, nach Anspruch 12, **dadurch gekennzeichnet, dass** die Seitenlichtfaser aus vier insbesondere polyoptischen Einzelfasern besteht, die von einem diffusen, weissen Mantel umhüllt werden.

14. Verkaufsvorrichtung zum Selbst-Checkout, nach Anspruch 13, wobei die Oberflächen der vier polyoptischen Einzelfasern durch ein abrasives Verfahren aktiviert sind, sodass ein homogener Lichtaustritt im Abstrahlwinkel von 360° aus der Seitenlichtfaser entsteht.

15. Verkaufsvorrichtung zum Selbst-Checkout, nach einem der vorgehergehenden Ansprüche, **dadurch gekennzeichnet, dass** die Steuereinheit, im Fall, dass die Artikelnummer einem Artikel entspricht, der der Fertigverpackungsverordnung unterliegt, die in der Fertigverpackungsverordnung vorgegeben Toleranzen berücksichtigt und die Zustandsmaschine sich im Freigabezustand befindet, wenn das Artikelgewicht sich innerhalb des in der Fertigverpackungsverordnung vorgegeben Gewichtsbandes befindet.

## Claims

1. Sales device for self-checkout comprising a weighing module, a product scanner for scanning article numbers of products, and a communication unit for transmitting and receiving article data to/from a network for storing article data, wherein the weighing module comprises a housing (18, 28), in which a load cell (30) is accommodated, wherein the load cell (30) comprises a fixed portion (31), a deformation portion (32) and a movable portion (33), wherein the fixed portion (31) is connected to the housing (18, 28) and the movable portion (33) carries a load cross (39) with a load plate (11, 21), wherein the deformation portion (32) has a strain gauge (36) for measuring a weight acting on the load plate (11, 21), **characterized in that** a luminous strip (19, 29) is attached to the outer wall (47) of the housing, and is attached to the housing (18, 28) substantially circumferentially, and **in that** the sales device comprises a control unit (51), which receives an article number from the product scanner and receives article data concerning this article number from the network via the communication unit, wherein the article data comprise at least one article weight, wherein the control unit (51) comprises a state machine (52), which represents at least one self-checkout state of the sales device, wherein the control unit (51) controls the luminous strip (19, 29) on the basis of the state of the state machine (52).

2. Sales device for self-checkout, according to Claim 1, **characterized in that** the state machine (52) is in a release state if the article weight and the measured weight match, and **in that** the state machine is in a blocking state if the article weight and the measured weight do not match.

3. Sales device for self-checkout, according to Claim 2, **characterized in that** the control unit applies a voltage to the luminous strip in a pulsed manner if the state machine is in a blocking state, and permanently applies a voltage thereto if the state machine is in a release state.

4. Sales device for self-checkout, according to any of Claims 1 to 3, **characterized in that** the luminous strip comprises a first group, a second group and a third group of LED illuminants and the control unit (51) permanently applies a voltage to the second group of LED illuminants (43) of the luminous strip (19, 29) if the state machine (52) is in a release state, and permanently applies a voltage to the third group of LED illuminants (43) of the luminous strip (19, 29) if the state machine (52) is in a blocking state.

5. Sales device for self-checkout, according to any of Claims 1 to 4, **characterized in that** the control unit tares the weighing module after a verification process by the state machine.

6. Sales device for self-checkout, according to any of Claims 1 to 5, **characterized in that** the control unit, upon detection of a load by the weighing module without obtaining an article number from the product scanner, puts the state machine into the blocking state and/or displays on an operator display an indication signal that the scanning process must be repeated.

7. Sales device for self-checkout, according to any of Claims 1 to 6, **characterized in that** the sales device comprises a payment terminal and the payment process can be started by a user input only if the state machine is in the release state, and in particular **in that** the control unit puts the state machine into a completion state after the successful completion of the payment process.

8. Sales device for self-checkout, according to any of Claims 1 to 7, **characterized in that** the luminous strip consists of a flexible carrier (42), on which the LED illuminants (43) are arranged, wherein the carrier (42) comprises in particular one to ten LED illuminants (43) per cm length, and in particular electrical leads for the control of the LED illuminants (43) are integrated in the flexible carrier (42) of the luminous strip (19, 29).

9. Sales device for self-checkout, according to any of the preceding claims, **characterized in that** the LED illuminants (43) generate light in the wavelength range of 230 nm to 500 nm and are coated in particular with phosphor, wherein in particular the luminous strip (19, 29) is coated with phosphor on the side on which the LED illuminants (43) are attached.

10. Sales device for self-checkout, according to any of Claims 1 to 9, **characterized in that** the flexible carrier (42) comprises first, second and third LED illuminants (43) which generate light in the wavelength range of 450 nm to 500 nm, 500 nm to 570 nm and respectively 610 nm to 760 nm and the first, second and third LED illuminants (43) are arranged in regular arrangements on the carrier, wherein the first, second and third LED illuminants (43) are in each case jointly controlled as a group, and wherein in particular the luminous strip is coated with silicone on the side on which the LED illuminants (43) are attached.

11. Sales device for self-checkout, according to any of the preceding claims, **characterized in that** the housing comprises a cutout or a single-sided cutout (44) provided circumferentially in the upper housing region (18, 28) on the outer side (47) of the housing (18, 28), into which the luminous strip (19, 29) is adhesively bonded, and in particular the sales device comprises a diffuser (49) which is attached to the outside of the housing and covers the cutout (44).

12. Sales device for self-checkout, according to any of Claims 1 to 7, **characterized in that** the luminous strip is a lateral light fibre.

13. Sales device for self-checkout, according to Claim 12, **characterized in that** the lateral light fibre consists of four in particular polyoptical individual fibres, which are encased by a diffuse, white cladding.

14. Sales device for self-checkout, according to Claim 13, wherein the surfaces of the four polyoptical individual fibres are activated by an abrasive method, thus resulting in a homogeneous light emergence at the emission angle of 360° from the lateral light fibre.

15. Sales device for self-checkout, according to any of the preceding claims, **characterized in that** the control unit, in the case where the article number corresponds to an article subject to the prepacked goods regulations, takes into account the tolerances specified in the prepacked goods regulations and the state machine is in the release state if the article weight is within the weight band specified in the prepacked goods regulations.

## Revendications

1. Dispositif de vente pour caisse automatique, comprenant un module de pesage, un scanner de produits pour scanner les numéros d'article des produits, et une unité de communication pour envoyer et recevoir des données d'article à un réseau pour enregistrer des données d'article, le module de pesage comprenant un boîtier (18, 28) dans lequel est logée une cellule de pesage (30), la cellule de pesage (30) comprenant une partie fixe (31), une partie déformable (32) et une partie mobile (33), la partie fixe (31) étant reliée au boîtier (18, 28) et la partie mobile (33) supportant une croix de charge (39) avec un plateau de charge (11, 21), la partie déformable (32) comprenant une jauge de contrainte (36) pour mesurer un poids agissant sur le plateau de charge (11, 21), **caractérisé en ce qu'**une bande lumineuse (19, 29) est agencée sur la paroi extérieure (47) du boîtier, qui est agencée de manière sensiblement périphérique sur le boîtier (18, 28), et **en ce que** le dispositif de vente comprend une unité de commande (51) qui reçoit un numéro d'article du scanner de produits et qui, par l'intermédiaire de l'unité de communication, reçoit des données d'article relatives à ce numéro d'article à partir du réseau, les données d'article comprenant au moins un poids d'article, l'unité de commande (51) comprenant une machine d'état (52) qui représente au moins un état d'encaissement automatique du dispositif de vente, l'unité de commande (51) commandant la bande lumineuse (19, 29) en fonction de l'état de la machine d'état (52).

2. Dispositif de vente pour caisse automatique selon la revendication 1, **caractérisé en ce que** la machine d'état (52) se trouve dans un état de validation lorsque le poids de l'article et le poids mesuré coïncident, et **en ce que** la machine d'état se trouve dans un état de blocage lorsque le poids de l'article et le poids mesuré ne coïncident pas.

3. Dispositif de vente pour caisse automatique selon la revendication 2, **caractérisé en ce que** l'unité de commande applique une tension pulsée à la bande lumineuse lorsque la machine d'état est dans un état de blocage et applique une tension en permanence lorsque la machine d'état est dans un état de validation.

4. Dispositif de vente pour caisse automatique selon l'une des revendications 1 à 3, **caractérisé en ce que** la bande lumineuse comprend un premier groupe, un deuxième groupe et un troisième groupe de dispositifs d'éclairage à DEL, et l'unité de commande (51) applique en permanence une tension au deuxième groupe de dispositifs d'éclairage à DEL (43) de la bande lumineuse (19, 29) lorsque la machine d'état (52) se trouve dans un état de validation, et applique en permanence une tension au troisième groupe de DEL (43) de la bande lumineuse (19, 29) lorsque la machine d'état (52) se trouve dans un état de blocage.

5. Dispositif de vente pour caisse automatique selon l'une des revendications 1 à 4, **caractérisé en ce que** l'unité de commande tare le module de pesage après un processus de vérification par la machine d'état.

6. Dispositif de vente pour caisse automatique selon l'une des revendications 1 à 5, **caractérisé en ce que** l'unité de commande, lors de la détection d'une charge par le module de pesée sans réception d'un numéro d'article par le scanner de produits, met la machine d'état dans l'état de blocage et/ou affiche sur un écran utilisateur un signal indiquant que le processus de scannage doit être répété.

7. Dispositif de vente pour caisse automatique selon l'une des revendications 1 à 6, **caractérisé en ce que** le dispositif de vente comprend un terminal de paiement et **en ce que** le processus de paiement ne peut être lancé par une entrée utilisateur que si la machine d'état se trouve dans l'état de validation, et en particulier **en ce que** l'unité de commande met la machine d'état dans un état d'achèvement après la conclusion réussie du processus de paiement.

8. Dispositif de vente pour caisse automatique selon l'une des revendications 1 à 7, **caractérisé en ce que** la bande lumineuse est constituée d'un support flexible (42) sur lequel sont agencés les dispositifs d'éclairage à DEL (43), le support (42) comprenant en particulier un à dix dispositifs d'éclairage à DEL (43) par cm de longueur, et en particulier des conducteurs électriques pour la commande des DEL (43) sont intégrés dans le support flexible (42) de la bande lumineuse (19, 29).

9. Dispositif de vente pour caisse automatique selon l'une des revendications précédentes, **caractérisé en ce que** les dispositifs d'éclairage à DEL (43) produisent une lumière dans la gamme de longueurs d'onde allant de 230 nm à 500 nm et sont notamment recouvertes de phosphore, la bande lumineuse (19, 29) étant notamment recouverte de phosphore sur le côté où sont agencées les dispositifs d'éclairage à DEL (43).

10. Dispositif de vente pour caisse automatique selon l'une des revendications 1 à 9, **caractérisé en ce que** le support flexible (42) comprend des premier, deuxième et troisième dispositifs d'éclairage à DEL (43) qui produisent de la lumière dans la gamme de longueurs d'onde allant de 450 nm à 500 nm, de 500 nm à 570 nm et de 610 nm à 760 nm, respectivement, et les premier, deuxième et troisième dispositifs d'éclairage à DEL (43) sont agencés en dispositions régulières sur le support, les premier, deuxième et troisième dispositifs d'éclairage à DEL (43) étant commandés ensemble en tant que groupe, et la bande lumineuse étant en particulier recouverte de silicone sur le côté sur lequel sont montés les dispositifs d'éclairage à DEL (43).

11. Dispositif de vente pour caisse automatique selon l'une des revendications précédentes, **caractérisé en ce que** le boîtier comprend un évidement ou un évidement unilatéral (44) qui est agencé de manière périphérique dans la partie supérieure (18, 28) du boîtier, sur le côté extérieur (47) du boîtier (18, 28), dans lequel est collée la bande lumineuse (19, 29), et en particulier le dispositif de vente comprend un diffuseur (49) qui est fixé à l'extérieur du boîtier et recouvre l'évidement (44).

12. Dispositif de vente pour caisse automatique selon l'une des revendications 1 à 7, **caractérisé en ce que** la bande lumineuse est une fibre optique latérale.

13. Dispositif de vente pour caisse automatique selon la revendication 12, **caractérisé en ce que** la fibre optique latérale est constituée de quatre fibres individuelles, en particulier polyoptiques, qui sont enveloppées d'une gaine blanche diffuse.

14. Dispositif de vente pour caisse automatique selon la revendication 13, dans lequel les surfaces des quatre fibres optiques individuelles sont activées par un processus abrasif, de sorte qu'une sortie homogène de la lumière sur un angle de rayonnement de 360° est obtenue à partir de la fibre optique latérale.

15. Dispositif de vente pour caisse automatique selon l'une des revendications précédentes, **caractérisé en ce que** l'unité de commande, dans le cas où le numéro d'article correspond à un article soumis à la réglementation sur les produits emballés, prend en compte des tolérances spécifiées dans la réglementation sur les produits emballés et que la machine d'état se trouve en état de validation lorsque le poids de l'article se situe dans la plage de poids spécifiée dans la réglementation sur les produits emballés.
